# FASCICULE DE BREVET EUROPEEN

(11) **EP 0 318 374 B1**
(45) Date de publication et mention de la délivrance du brevet: **04.08.1993**
(21) Numéro de dépôt: 88402938.0
(22) Date de dépôt: 24.11.1988
(51) Int. Cl.: H04N 7/08, H04N 5/92

(54) **Procédés et dispositifs pour enregistrer et ou pour transmettre des débits élevés de signaux binaires par des moyens connus d'enregistrement et/ou de transmission de signaux vidéo et pour relire les informations numériques**
Verfahren und Vorrichtungen zur Aufzeichnung und/oder Übertragung hoher Datenraten von binären Signalen mit bekannten Mitteln für Aufzeichnung und/oder Übertragung von Videosignalen und zum wiederholten Lesen digitaler Informationen
Methods and devices for recording and/or transmitting high rates of binary signals by known means for the recording and/or transmission of video signals and for rereading the digital information

(30) Priorité: 25.11.1987 FR 8716325
(43) Date de publication de la demande: 31.05.1989
(73) Titulaire: ETAT-FRANCAIS représenté par le DELEGUE GENERAL POUR L'ARMEMENT (DPAG), F-75996 Paris Armées (FR)
(72) Inventeur: Dropsy, Patrick M., F-83430 Saint-Mandrier/Mer (FR)

(56) Documents cités:
- GB-A- 2 056 813
- US-A- 3 806 637
- US-A- 3 838 444
- US-A- 4 225 967
- US-A- 4 387 406
- IEEE TRANSACTIONS ON CONSUMER ELECTRONICS, vol. CE-22, no. 4, novembre 1976, pages 327-337; G.C. KENNEY: "Special purpose applications of the optical videodisc system"
- SMPTE JOURNAL, vol. 95, no. 8, août 1986, pages 814-815, The Society of Motion Picture and Television Engineers, Inc., White Plains, New York, US; A. STAKOV et al.: "Transmission of additional information in the active television lines"
- PATENT ABSTRACTS OF JAPAN, vol. 6, no. 38 (P-105)[916], 9 mars 1982, page 133 P 105; & JP-A-56 156 907 (TOKYO SHIBAURA DENKI K.K.) 03-12-1981
- THE RECORD OF THE IEEE 1980 INTERNATIONAL RADAR CONFERENCE, Arlington, Virginia, 28-30 avril 1980, pages 397-402, IEEE, New york, US; R. INAGAKI et al.: "Extended time radar raw video recording"
- EBU REVIEW, no. 158, août 1976, pages 163-171, European Broadcasting Union Technical Centre, Bruxelles, BE; F. PILZ: "Techniques for transmitting subtitles for television programmes in such a way that their display is optional"

## Description

La présente invention a pour objet des procédés et des dispositifs pour enregistrer et/ou pour transmettre à distance et pour relire des signaux binaires qui apparaissent à une cadence pouvant atteindre 1 Mbit/seconde, en utilisant des moyens connus d'enregistrement et/ou de transmission de signaux vidéo et les procédés et dispositifs pour relire les informations numériques.

Le secteur technique de l'invention est celui de l'enregistrement et de la transmission de données numériques codées en binaire.

Il existe de nombreux cas d'installations industrielles, dans lesquelles des signaux binaires transitent à grande cadence, en série sur une ligne commune (bus) ou en parallèle sur plusieurs lignes.

Dans de nombreux cas pratiques, ces signaux apparaissent fréquemment en même temps que des signaux vidéo fournis par une caméra de télévision ou par un analyseur d'images.

On connait des procédés permettant de transmettre/recevoir des données numériques, dans une bande de fréquences normalement occupée par un signal vidéo.

Le brevet US-A-3 838444 décrit un procédé faisant appel à des signaux additionnels de fréquence comprise entre les bandes de luminance et de chrominance.

Dans le cas de ce brevet, le débit des informations numériques pouvant être transmises est limité afin de ne pas empiéter sur les bandes de luminance et de chrominance et inférieur à 1 Mbit/seconde.

Le brevet US-A-4 387406 décrit un procédé de transmission et stockage de données numériques impliquant à la fois l'utilisation des voies de chrominance et de luminance du signal vidéo ; ce procédé rend inutilisable la voie de luminance dans sa fonction initiale qui est de porter l'information vidéo (signal noir et blanc).

Un objectif de la présente invention est de procurer des moyens permettant d'enregistrer des signaux binaires produits à grande cadence ou de transmetre ceux-ci en utilisant les mêmes magnétoscopes ou les mêmes moyens de transmission que ceux que l'on utilise pour enregistrer et/ou pour transmettre les signaux vidéo par le procédé PAL ou par le procédé NTSC, sans dégrader l'information vidéo en noir et blancs.

Dans le cas où les signaux binaires sont émis en même temps que des signaux vidéo, un autre objectif de l'invention est de procurer des moyens permettant d'enregistrer simultanément les signaux vidéo de luminance et les signaux binaires, sur le même support d'enregistrement et/ou de les transmettre simultanément par le même canal, de sorte que l'on puisse conserver la relation temporelle entre des images vidéo et des valeurs numériques mesurées simultanément.

Un exemple non limitatif d'un cas pratique d'utilisation de l'invention est celui d'une unité centrale qui est reliée par un bus unifilaire ou par un bus composé de plusieurs lignes parallèles à plusieurs postes comportant chacun un capteur qui envoie sur le bus des informations numériques sous forme de signaux binaires à très grande cadence, de l'ordre de 1 Mbit/sec.

L'unité centrale peut être, par exemple, une unité de commande centrale d'un procédé de fabrication, par exemple d'une tour de distillation,ou d'un train de laminoir, ou d'un réacteur nucléaire etc..., qui est reliée à différents capteurs de température, de pression, de niveau et.... ou à des servomoteurs équipés d'un microprocesseur local. Il est intéressant de pouvoir enregistrer tous les signaux binaires qui ont circulé sur le bus pendant une période déterminée pour pouvoir analyser ces signaux en cas d'incident ou pour pouvoir vérifier le fonctionnement de l'installation ou pour garder un enregistrement complet d'une période d'essais réels afin d'analyser ensuite plus en détail l'évolution des différents paramètres de l'installation tout au long de cette période d'essais.

La présente invention procure des moyens qui permettent d'enregistrer 2,5.10⁹ bits pour une heure de fonctionnement avec un débit de l'ordre de 0,7 Mbit/sec.

L'installation industrielle peut également comporter une caméra de télévision qui délivre des images d'un des éléments de l'installation. Par exemple, un robot locomoteur peut comporter une caméra qui fournit des images de l'espace situé à l'avant d'un robot et divers actionneurs qui sont reliés à ùne unité centrale par une ligne commune (bus), sur laquelle ils reçoivent des trains de signaux binaires qui commandent les moteurs de ces actionneurs. Dans un pareil cas, la présente invention procure des moyens qui permettent d'enregistrer simultanément sur le même support les signaux vidéo en noir et blanc, fournis par la caméra et les signaux binaires transitant par le bus, ce qui permet ensuite de reconstituer et d'étudier l'état de chaque actionneur en corrélation avec la position du robot dans l'espace, qui est donnée par l'image de télévision.

On rappelle que le procédé de télévision PAL comporte un signal de luminance et un signal de chrominance qui est véhiculé par une onde sous-porteuse ayant généralement une fréquence de 4,43 MHz, qui est modulée en phase et qui a une bande passante ayant une largeur d'environ 1 MHz. Cette largeur de bande passante de 1 MHz permet d'utiliser cette onde sous-porteuse pour véhiculer et/ou pour enregistrer des signaux binaires dont la cadence d'émission peut atteindre 1 Mbit/sec.

Les bandes magnétiques utilisées dans les magnétoscopes industriels du standard PAL, par exemple dans les magnétoscopes de marque "U-MATIC" vendus par SONY, comportent des cassettes permettant une heure d'enregistrement soit 2,5 Gbit, à raison de 0,7 Mbit/sec.

Un procédé selon l'invention consiste à associer à un magnétoscope au standard PAL ou NTSC, un dispositif électronique qui permet de moduler en phase une onde sous-porteuse ayant une fréquence de 4,43 MHz, au moyen des signaux binaires à enregistrer au lieu de la moduler en phase par un signal de chrominance puis d'enregistrer cette onde modulée sur ledit magnétoscope au standard PAL ou NTSC, comme on enregistrerait le signal de chrominance.

Un dispositif selon l'invention, dans lequel on enregistre six octets par ligne en conservant environ 600 lignes par image, permet d'enregistrer environ 700.000 bits/seconde.

Les objectifs de l'invention sont atteints par un procédé pour enregistrer et/ou pour transmettre un grand débit de signaux binaires en utilisant des moyens connus d'enregistrement et/ou de transmission de signaux vidéo, lequel procédé comporte les opérations suivantes :
- on génère une onde porteuse ayant une fréquence égale à celle d'une onde porteuse de signaux analogiques vidéo de chrominance;
- on module en phase ladite onde porteuse à 0° ou à 180° par lesdits signaux binaires au moyen d'un modulateur de phase;
- on mélange l'onde modulée avec des impulsions de synchronisation vidéo et avec des salves de référence de phase et les signaux obtenus peuvent être enregistrés sur un magnétoscope au standard PAL ou NTSC et/ou transmis à distance.

Un procédé selon l'invention pour lire des informations numériques sortant d'un magnétoscope, d'une antenne ou d'un câble vidéo, sous la forme d'une onde porteuse vidéo modulée en phase et mélangée à des impulsions de synchronisation et à des salves de référence de phase comporte les opérations suivantes :
- on isole ladite onde porteuse modulée en phase au moyen d'un filtre passe-bande;
- on génère des impulsions enveloppant lesdites salves de référence au moyen d'un circuit séparateur d'impulsions;
- on envoie ladite onde porteuse modulée en phase et lesdites impulsions enveloppe des salves de référence de phase, sur deux entrées d'un circuit qui émet en continu une onde de référence en phase avec lesdites salves de référence de phase et qui laisse passer ladite onde modulée en phase;
- on envoie ladite onde de référence sur une entrée d'un circuit démodulateur de phase et ladite onde modulée en phase sur une autre entrée dudit circuit démodulateur de phase;
- et on recueille à la sortie dudit circuit démodulateur de phase, des impulsions qui reproduisent les signaux binaires représentant lesdites informations numériques.

Avantageusement, un procédé selon l'invention est utilisé pour enregistrer et/ou pour transmettre, par des moyens connus d'enregistrement et/ou de transmission de signaux vidéo, à la fois un grand débit de signaux binaires représentant des informations numériques et des images vidéo en noir et blanc prises en même temps que les mesures numériques.

Dans ce cas, un procédé selon l'invention comporte les opérations suivantes :
- on filtre les signaux vidéo au moyen d'un filtre bouchon qui arrête l'onde porteuse modulée par les signaux de chrominance ayant une fréquence de 4,43 MHz et qui laisse passer les signaux de luminance et les impulsions de synchronisation;
- on génère une onde porteuse ayant une fréquence de 4,43 MHz;
- on module en phase ladite onde porteuse à 0° ou à 180° par lesdits signaux binaires au moyen d'un modulateur de phase;
- et on mélange le signal vidéo de luminance, les impulsions de synchronisation, ladite onde à 4,43 MHz modulée en phase et les salves de référence de phase, de sorte qu'on obtient des signaux vidéo qui peuvent être enregistrés sur un magnétoscope et/ou transmis à distance par un canal vidéo et qui permettent d'obtenir à la fois des images en noir et blanc et des données numériques.

Avantageusement, on détermine certains nombres de lignes au début et à la fin de chaque trame vidéo qui ne supportent aucune information numérique afin d'éviter les perturbations de phase dues aux commutations des têtes de lecture du magnétoscope qui risqueraient d'entraîner des erreurs dans les informations numérique transmises et/ou lues après enregistrement.

Selon une caractéristique de l'invention, on crée, au début de chacune des lignes supportant des informations numériques, un front de référence qui précède le premier signal binaire d'une durée bien déterminée et qui est transmis et/ou enregistré comme un signal binaire.

Un dispositif selon l'invention, pour enregistrer et/ou pour transmettre des informations numériques par des moyens connus en vidéo comporte un oscillateur stabilisé par un quartz qui émet une onde ayant une fréquence égale à celle de l'onde porteuse des signaux de chrominance et un modulateur de phase qui reçoit ladite onde porteuse sur une de ses entrées, qui reçoit lesdits signaux binaires sur sa borne de commande et qui délivre, sur sa sortie, ladite onde porteuse non déphasée pendant que ledit signal binaire est au niveau zéro et déphasée à 180°, pendant que ledit signal binaire est au niveau 1, un générateur d'impulsions de synchronisation vidéo et un mélangeur qui reçoit lesdites impulsions de synchronisation vidéo et ladite onde porteuse modulée en phase et qui les mélange.

Un dispositif selon l'invention de lecture des informations numériques sortant d'un magnétoscope, d'une antenne ou d'un câble vidéo sous la forme d'une onde porteuse modulée en phase par des signaux binaires et mélangée à des impulsions de synchronisation et à des salves de référence de phase, comporte un filtre passe-bande, accordé sur la fréquence de ladite onde porteuse qui laisse passer celle-ci et lesdites salves de référence de phase; un extracteur de synchros associé à un séparateur de synchros, qui émet sur une sortie des impulsions enveloppes desdites salves de référence; un générateur de référence qui a deux entrées, une entrée connectée à la sortie dudit filtre et une entrée connectée à ladite sortie dudit séparateur de synchros et qui a deux sorties, une première sortie qui délivre une onde de référence en phase avec lesdites salves de référence de phase et une deuxième sortie qui délivre ladite onde modulée en phase et un démodulateur de phase, dont l'entrée d'onde modulée est connectée sur ladite deuxième sortie et dont la sortie délivre des impulsions qui constituent lesdits signaux binaires.

L'invention a pour résultat la possibilité d'enregistrer sous forme analogique, une très grande quantité d'informations numériques sur des bandes de magnétoscope, en utilisant des bandes et des magnétoscopes disponibles dans le commerce.

L'invention permet également de transmettre à distance un grand flux d'informations numériques, de l'ordre de 700 Kbits/sec, sous forme analogique en utilisant les moyens de transmission vidéo existant.

Un avantage particulier du procédé et des dispositifs selon l'invention réside dans le fait qu'ils permettent d'enregistrer ou de transmettre simultanément des signaux vidéo représentant une image en noir et blanc et des informations numériques mesurées pendant la prise des images vidéo, ce qui permet de conserver la relation temporelle entre les images et les mesures, laquelle est souvent très utile pour interpréter les mesures.

Les dispositifs de modulation et de démodulation selon l'invention permettent de placer des informations numériques sur une onde porteuse vidéo en utilisant des modulateurs de phase connus, par exemple des mélangeurs de fréquence en anneau qui sont utilisés habituellement pour obtenir une fréquence de battement ou comme modulateurs d'une fréquence par une autre fréquence.

La description suivante se réfère aux dessins annexés qui représentent, sans aucun caractère limitatif, des exemples de réalisation de dispositifs selon l'invention.

La figure 1 est un schéma général sous forme de bloc diagramme des circuits et composants essentiels d'un dispositif selon l'invention destiné à placer des informations numériques sur une onde porteuse vidéo, afin de permettre l'enregistrement et/ou la transmission des valeurs numériques par des moyens vidéo connus.

La figure 2 est un schéma d'un mélangeur de fréquences ou modulateur de phase en anneau.

La figure 3 est un chronogramme des impulsions apparaissant en divers points des circuits de la figure 1 pendant les lignes qui sont utilisées pour supporter des informations numériques.

La figure 4 est un schéma général sous forme de bloc diagramme des circuits et composants essentiels d'un dispositif selon l'invention destiné à lire les informations numériques supportées par une onde porteuse vidéo sortant d'un magnétoscope, d'une antenne vidéo ou d'un câble vidéo.

La figure 5 est un chronogramme des impulsions apparaissant en divers points des circuits de la figure 4 pendant les lignes qui sont utilisées pour supporter des informations numériques.

La figure 6 est une vue d'ensemble d'une installation selon l'invention pour enregistrer des valeurs numériques et pour les traiter ultérieurement.

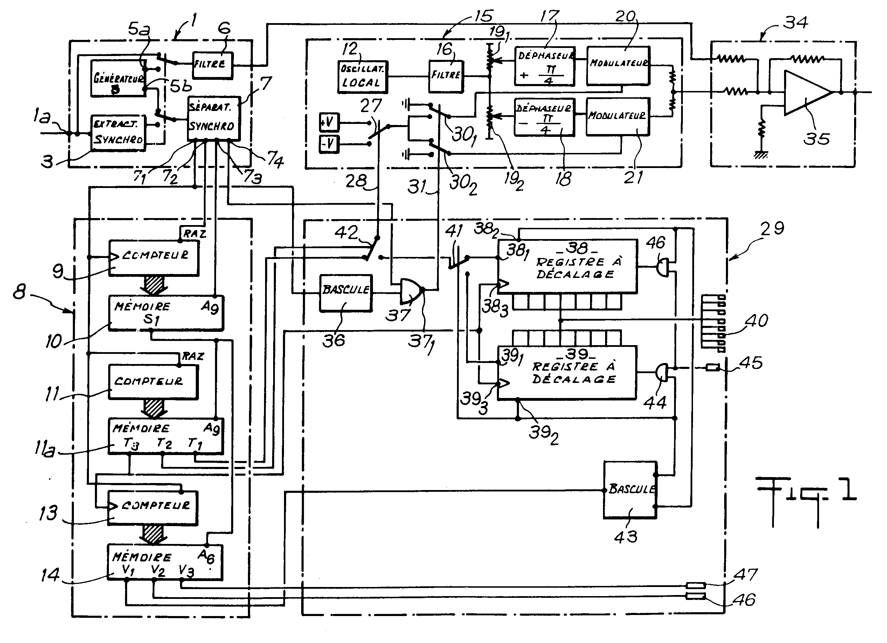

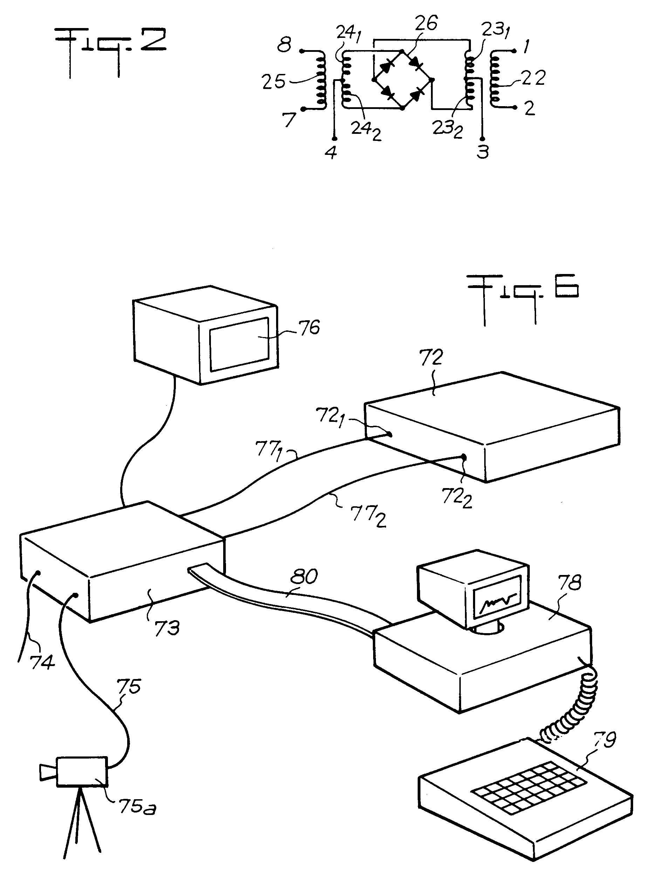

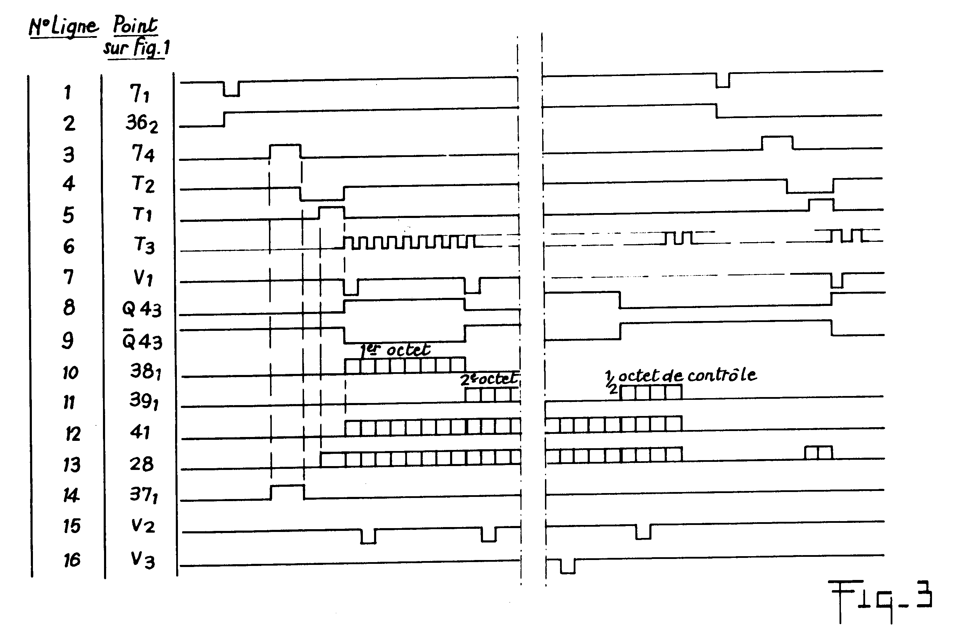

La figure 1 est un bloc diagramme des composants et circuits de modulation qui permettent d'obtenir une onde porteuse ayant une fréquence qui correspond à celle de l'onde porteuse des signaux vidéo de chrominance, mélangée à des impulsions de synchronisation vidéo, dites synchro trame ou image et synchro ligne et de moduler en phase cette onde porteuse par des signaux binaires représentant des valeurs numériques, laquelle onde modulée en phase peut être enregistrée sur un magnétoscope au standard PAL ou NTSC ou peut être transmise à distance sur n'importe quelle liaison vidéo existante (canal herzien ou câble).

La figure 1 représente un premier bloc 1 qui reçoit éventuellement sur une borne d'entrée la, des signaux vidéo provenant d'une caméra vidéo ou d'un synthétiseur d'images vidéo.

Ces signaux vidéo comportent des impulsions de synchronisation (synchros image et synchros ligne), un signal vidéo de luminance qui permet d'obtenir des images en noir et blanc et, éventuellement un signal vidéo de chrominance qui est supporté par une onde porteuse, qui a généralement une fréquence de 4,43 MHz et qui est modulée en phase.

Les signaux vidéo sont envoyés sur un extracteur de synchro 3 qui commande un commutateur à deux étages 4a, 4b. L'extracteur de synchro 3 détecte la présence ou l'absence d'un signal vidéo sur la borne la et émet un signal logique qui actionne le commutateur 4a, 4b.

Le bloc 1 comporte un générateur 5 qui émet sur une première borne de sortie 5a un signal vidéo de luminance uniforme et sur une deuxième borne de sortie 5b des impulsions de synchronisation vidéo.

Le premier étage 4a du commutateur a deux bornes d'entrée, l'une connectée à la borne la et l'autre connectée à la borne 5a.

La sortie du premier étage 4a est connectée sur un filtre 6 qui est un circuit bouchon accordé sur la fréquence 4,43 MHz. Ce circuit élimine le signal de chrominance contenu dans le signal vidéo reçu sur la borne 1a. Il ne laisse passer que le signal vidéo de luminance et les impulsions de synchronisation.

Le bloc 1 comporte un régénérateur et séparateur des impulsions de synchronisation 7.

Le deuxième étage 4 b du commutateur comporte deux entrées qui sont connectées l'une à la borne 5b et l'autre à la sortie de l'extracteur de synchro 3.

L'extracteur synchro 3 a pour fonction d'isoler les impulsions de synchronisation et de les transformer en signaux logiques au standard T.T.L.

Les synchros au standard CCIR ont, par exemple, une amplitude de 300 mv et l'extracteur 3 délivre des signaux logiques au niveau 0-5 volt compatibles avec les circuits T.T.L.

Le circuit régénérateur et séparateur de synchros 7 a quatre sorties repérées respectivement 7₁, 7₂, 7₃ et 7₄.

La sortie 7₁ délivre des impulsions qui correspondent aux synchros ligne.

La sortie 7₂ délivre des impulsions correspondant aux synchros trame.

La sortie 7₃ délivre un signal logique au niveau 0, dans le cas d'une tramme de rang pair et au niveau 1 dans le cas d'une trame de rang impair.

La sortie 7₄ délivre un signal dit enveloppe de salve de référence, qui se situe à un instant déterminé après chaque synchro ligne et qui a une durée déterminée.

On rappelle brièvement que les signaux vidéo sont composés de deux demi-images ou trames dites paires, comportant 312 lignes et impaires comportant 313 lignes pour un standard à 625 lignes. Les lignes des deux trames sont entrelacées. Chaque trame commence par une impulsion dite synchro trame et chaque ligne commence par une synchro ligne. Chaque ligne dure 64 µ et il y a 25 images/seconde.

Les images vidéo sont générées sous forme d'un signal de luminance qui est représentée par l'amplitude du signal vidéo et d'un signal de chrominance, lequel, dans les standards PAL et NTSC qui intéressent l'invention, module en phase une sous-porteuse ayant généralement une fréquence de 4,43 MHz.

Au début de chaque ligne, immédiatement après chaque synchro ligne, le signal de chrominance comporte quelques alternances de l'onde porteuse non déphasée, destinées à servir de référence de phase zéro. Ces alternances sont appelées salves de référence ou signal de "burst".

Les procédés selon l'invention utilisent une onde porteuse ayant une fréquence de 4,43 MHz, pour supporter des informations numériques sous forme binaire, qui modulent cette onde en phase par tout ou rien, le niveau binaire zéro correspondant à un déphasage nul et le niveau binaire 1 correspondant à un déphasage à 180°.

Au début de chaque trame, l'onde porteuse risque d'être perturbée et il faut éviter d'utiliser les zones perturbées qui risqueraient d'amener des erreurs sur les informations numériques. Il faut donc choisir dans chaque trame, les lignes qui peuvent être utilisées pour supporter les informations numériques en éliminant les risques d'erreurs.

Une autre difficulté réside dans la disposition des informations numériques sur les lignes, afin de pouvoir relire ces informations sans erreur dans le module de lecture.

Les informations numériques ne peuvent pas être placées sur toutes les lignes des trames paires et impaires.

En effet, lorsque les signaux vidéo sont enregistrés sur une bande de magnétoscope, la lecture de la bande s'effectue suivant des lignes obliques à l'aide de plusieurs têtes magnétiques qui sont connectées alternativement.

La commutation des têtes entraîne des perturbations et une instabilité de la phase qui peut durer jusqu'à 15 ou 25 lignes suivant la qualité du magnétoscope. Cette instabilité est due au temps nécessaire pour se recaler sur la phase de référence zéro donnée par la salve de référence. Elle est due également à la qualité du magnétoscope, au niveau de l'asservissement de la vitesse de rotation des têtes de lecture et de la vitesse de défilement de la bande magnétique.

La commutation des têtes de lecture a lieu environ 1 à 6 lignes avant chaque synchro de trame.

De plus, il est très important de placer les informations numériques à des emplacements bien déterminés de chaque ligne pour pouvoir les récupérer avec précision sur le module de lecture.

Selon la présente invention, on place en série sur chaque ligne vidéo 5 ou 6 octets seulement, plus de 5 bits de contrôle en fin de ligne.

Le problème à résoudre est de déterminer, d'une façon précise, le début des informations numériques sur chaque ligne.

On pourrait envisager de placer ce début à une distance déterminée de la synchro ligne qui précède, mais cette solution n'est pas satisfaisante.

En effet, les synchros ligne et trame peuvent être altérées par des perturbations.

Selon l'invention, on dispose les informations numériques sur chaque ligne par rapport à un signal particulier dit front de référence, qui est généré par les circuits de modulation et qui suit les informations numériques, c'est-à-dire qui est enregistré ou transmis en même temps que celles-ci, qu'il précède immédiatement sur chaque ligne, de sorte qu'il est reconnu par les circuits de lecture et de démodulation.

Selon l'invention, on crée sur chaque ligne un front de référence qui sert d'origine précise pour les informations numériques et qui est un changement de phase de 0° à 180°. Ce changement de phase a une durée déterminée et les informations numériques commencent immédiatement après.

Ce front de référence se situe à une distance déterminée de chaque synchro ligne, par exemple à 8 alternance du signal 4,43 MHz.

Après avoir expliqué le problème du positionnement des données numériques sur certaines lignes, on revient aux circuits de la figure 1, qui représente les moyens pour obtenir ce positionnement précis.

La figure 1 représente un bloc 8 qui contient plusieurs compteurs associés à des mémoires destinées à générer des signaux qui sont utilisés pour commander l'enregistrement des valeurs numériques sur l'onde sous-porteuse à 4,43 MHz.

Le bloc 8 contient un premier compteur d'impulsions 9, dont l'entrée d'horloge est connectée sur la sortie 7₁ du régénérateur 7. Le compteur 9 est un compteur à 9 étages capable de compter jusqu'à 2⁹ = 512, qui reçoit et compte les synchros ligne. Les neuf étages du compteur sont connectés sur neuf étages Ao à A8 d'une mémoire 10 ayant une capacité de 1 Kilobits (1024 pas d'adresse).

Cet ensemble compteur 9 et mémoire 10 est destiné à sélectionner les lignes vidéo que l'on va utiliser pour supporter les signaux binaires.

La borne de remise à zéro RAZ du compteur 9 est connectée sur la sortie 7₂ et reçoit les synchros de trame.

Le compteur 9 peut compter jusqu'à 512. Il est remis à zéro par chaque synchro de trame après avoir compté alternativement 312, puis 313, puis 312 etc....

Le compteur 9 sert de compteur d'adresse de la mémoire 10. Le dernier étage A9 de la mémoire 10 est connecté sur la sortie 7₃ et reçoit donc alternativement un signal binaire 0 pour les trames paires et un signal binaire 1 pour les trames impaires.

On désire éviter d'utiliser les premières et les dernières lignes de chaque trame pour supporter des informations numériques. Par exemple, on veut éviter d'utiliser les seize premières lignes 0 à 15 de chaque trame paire et impaire, les sept dernières lignes 306 à 312 de chaque trame paire et les sept dernières lignes 307 à 313 de chaque trame impaire.

On programme la mémoire pour arriver à ce but, c'est-à-dire que l'on inscrit un 1 dans les cases de la mémoire correspondant aux adresses 0 à 15 et 306 à 312, ainsi qu'aux adresses 512 à 527 et 819 à 821 et un zéro dans toutes les autres cases de la mémoire qui correspondent aux lignes que l'on veut utiliser.

La sortie S1 de la mémoire est connectée sur la borne d'entrée de poids le plus élevé de deux autres mémoires, qui sont décrites ci-après.

Le bloc 8 contient un deuxième compteur 11, identique au compteur 9, qui est associé à une deuxième mémoire 11a, identique à la mémoire 10, dont il sert de compteur d'adresse.

L'entrée d'horloge du compteur 11 est connectée sur une horloge électronique 12, stabilisée par un quartz, dont la fréquence est de 4,43 MHz. La borne de remise à zéro du compteur 11 est connectée sur la borne de sortie 7₁ et reçoit donc les synchros ligne.

L'ensemble compteur 11 et mémoire 11a est destiné à générer les signaux de décalage des bits dans les registres à décalage parallèle/série pour attaquer la modulation de phase. Il a également pour fonction de délivrer les fronts de référence qui sont rajoutés au début de chaque information série pour bien situer ce début.

Le bit de poids le plus élevé A9 de la mémoire 11a est connecté sur la sortie S1 de la mémoire 10, qui est au niveau zéro ou 1. Si la sortie S1 est au niveau 0, les informations peuvent sortir de la deuxième mémoire 12. Si, au contraire, la sortie S1 de la mémoire 10 est au niveau 1, la mémoire 12 est inhibée et elle n'émet aucune sortie.

La période de l'onde à 4,43 MHz dure 0,225 µs. Une ligne vidéo dure 64 µs, dont il faut soustraire 4 µs pour la synchro ligne. Il reste donc 60 µs pendant lesquelles prennent place 226 alternances de l'onde à 4,43 MHz.

Le compteur 11 peut compter jusqu'à 512, mais il est remis à zéro pour chaque synchro ligne lorsqu'il a atteint 226.

La mémoire 11a comporte trois sorties repérées T1, T2 et T3.

La sortie T1 définit la position du front de référence sur chaque ligne, la sortie T2 émet une impulsion rectangulaire appelée enveloppe du front de référence qui encadre le front de référence et qui sert à aiguiller vers le modulateur de phase successivement le front de référence puis les signaux binaires représentant les valeurs numériques.

La sortie T3 émet des impulsions en forme de créneau dont la durée est égale à quatre alternances de 4,43 MHz, soit 900 µs, qui servent d'impulsions d'horloge commandant les registres à décalage.

La sortie T3 est connectée sur l'entrée d'horloge d'un troisième compteur d'impulsions 13, identique aux compteurs 9 et 11. La borne de remise à zéro du compteur 13 est connectée sur la borne 7₁ et reçoit les synchros ligne. Le compteur 13 est associé à une troisième mémoire 14 et fait fonction de compteur d'adresse de celle-ci.

L'entrée A6 de poids le plus élevé de cette mémoire est connectée à la sortie S1 de la première mémoire 10. La mémoire 14 a trois voies V1, V2 et V3.

L'ensemble compteur 13 et mémoire 14 est destiné à délivrer des impulsions de commutation des registres à décalage et à générer des impulsions de demande de présentation d'un octet à l'entrée des registres à décalage.

Le compteur 13 compte les impulsions émises par la sortie T3 de la deuxième mémoire. Comme il y a sur chaque ligne six octets d'informations numériques plus quatre bits de contrôle, soit au total 52 bits, le compteur 13 compte de 0 à 52, puis il est remis à zéro par la synchro ligne suivante.

La sortie V1 émet une impulsion au début de chaque octet et au début du demi-octet de contrôle. La sortie V2 émet des impulsions de demande de chargement d'un octet dans les registres à décalage.

La sortie V3 émet une impulsion de demande de chargement du demi-octet de contrôle dans les registres à décalage.

La figure 1 représente un bloc 15 qui comprend les circuits et composants qui permettent de moduler en phase, en tout ou rien,une onde ayant une fréquence de 4,43 MHz, par des informations numériques en code binaire.

Le bloc 15 comporte une horloge électronique 12 qui est un oscillateur stabilisé par un quartz ayant une fréquence propre de 4,43 MHz.

L'oscillateur 12 a une sortie au niveau logique T.T.L. qui est connectée, comme on l'a vu,sur l'entrée du compteur 11. Cette sortie est connectée également sur un filtre 16 à bande passante étroite qui laisse passer uniquement la fréquence fondamentale sinusoïdale à 4,43 MHz.

La sortie du filtre 16 est connectée en parallèle sur deux déphaseurs 17 est 18 qui déphasent la tension oscillante respectivement de + 45° et de - 45°, afin d'obtenir deux tensions sinusoïdales déphasées de 90°.

La sortie du filtre est connectée sur chaque déphaseur par l'intermédiaire d'un potentiomètre 19₁ ou 19₂, qui permet de régler l'amplitude de l'onde porteuse à 4,43 MHz.

Il est plus facile de réaliser deux déphasages à ± 45° qu'un seul déphasage à 90°, car la stabilité de phase est meilleure. Toutefois, les deux déphaseurs 17 et 18 pourraient être remplacés par un déphaseur unique à 90°, placé sur une des deux voies.

Ce déphaseur à 90° est dû à la nécessité d'être compatible avec le standard PAL, dans lequel les salves de référence sont déphasées d'une ligne à la suivante de + 90° pour permettre d'éliminer les dérives de phase.

Le bloc 15 comporte deux circuits identiques 20 et 21 qui sont des circuits essentiels, dans lesquels on module la phase de l'onde porteuse ayant une fréquence de 4,43 MHz par les signaux binaires qui constituent les informations numériques.

La figure 2 est une représentation schématique à plus grande échelle d'un mode de réalisation non limitatif, de l'un des circuits 20 ou 21, étant précisé qie ces circuits peuvent être constitués par n'importe quel modulateur de phase connu.

Chaque circuit 20 ou 21 est un circuit connu sous le nom de mélangeur de fréquences ou de modulateur ou démodulateur en anneau, ou de mélangeur à double balance (double-balanced mixers DBM), qui peuvent être utilisés pour mélanger deux fréquences dites oscillation locale (L.O.) et radio fréquence (RF) pour obtenir une fréquence de battement dite fréquence intermédiaire (I.F.). Ces circuits sont vendus par exemple par la firme Scientific Components Corp. dans la série SRA. Ils comportent un enroulement primaire 22, ayant des bornes 1 et 2 entre lesquelles on applique une première tension par exemple la fréquence locale (L.O.). Cet enroulement primaire 1 est couplé par induction avec deux premiers demi-enroulement secondaires 23₁ et 23₂, ayant un point milieu connecté sur une borne 3. Il comporte deux seconds demi-enroulements de sortie 24₁ et 24₂ ayant un point milieu qui est connecté sur une borne 4.

Les deux demi-enroulements 24₁ et 24₂ sont couplés par induction avec un enroulement de sortie 25 ayant deux bornes 7 et 8, entre lesquelles on applique une deuxième tension dite radio fréquence (R.F.). Il comporte un pont de diodes 26 dont les deux extrémités d'une diagonale sont connectées sur les extrémités externes des deux premiers demi-enroulements secondaires 23₁, 23₂ et dont les deux extrémités de l'autre diagonale sont connectées sur les deux extrémités externes de deux seconds demi-enroulements secondaires 24₁, 24₂.

La tension intermédiaire ou tension de battement est récupérée entre les bornes 3 et 4.

Ce circuit est réversible. Ces circuits peuvent être utilisés pour détecter une différence de phase entre deux tensions de même fréquence appliquées respectivement entre les bornes 1 et 2 et les bornes 7 et 8 et, dans ce cas, on recueille entre les bornes 3 et 4 un courant continu proportionnel à la différence de phase. Cette application est également réversible. La présente invention utilise cette deuxième propriété des mélangeurs en anneau.

Si on applique une tension sinusoïdale entre deux bornes extrêmes 1 et 2 par exemple et des impulsions en créneaux entre les bornes 3 et 4, on obtient entre les bornes 7 et 8 une tension sinusoïdale de même fréquence que la tension appliquée entre les bornes 1 et 2 qui ne sera pas déphasée lorsque la tension en créneaux est au niveau zéro et qui présentera un déphasage déterminé par exemple 180° lorsque la tension en créneaux est au niveau 1.

Inversement, si l'on applique aux bornes 1 et 2 une tension alternative sinusoïdale et aux bornes 7 et 8 une tension de même fréquence qui est alternativement déphasée à 180° et non déphasée, on obtient entre les bornes 3 et 4 une tension en créneaux, c'est-à-dire des impulsions.

Les circuits 20 et 21 peuvent donc être utilisés pour moduler en phase une tension sinusoïdale appliquée entre les bornes 1 et 2 ou 7 et 8, par une suite d'impulsions représentant des nombres binaires appliqués en série entre les bornes 3 et 4 et c'est cette application qui est utilisée dans le bloc 15 de la figure 1.

Des circuits mélangeurs identiques peuvent être également utilisés pour démoduler une tension modulée en phase et c'est cette deuxième application qui est utilisée dans les circuits démodulateurs qui seront décrits ci-après.

Revenant aux figures 1 et 2, on applique entre les bornes d'entrée 1 et 2 du circuit mélangeur 20 la tension à 4,43 MHz sortant du déphaseur 17 et entre les bornes 1 et 2 du circuit mélangeur 21 la tension à 4,43 MHz sortant du déphaseur 18.

On a représenté sur la figure 1 deux sources de tension +V et -V par exemple + 200 mV et - 200 mV, qui représentent le niveau 1 et le niveau 0 des impulsions véhiculant les informations numériques. Ces deux sources sont connectées sur les deux entrées d'un commutateur 27, qui est commandé par les impulsions représentant les informations numériques qui arrivent en série, sur une ligne 28 provenant d'un autre bloc 29 qui sera décrit ultérieurement.

La sortie commune du commutateur 27 est connectée en parallèle respectivement sur une borne d'entrée d'un premier commutateur 30₁, dont la deuxième borne d'entrée est à la masse et sur une borne d'entrée d'un deuxième commutateur 30₂, dont la deuxième borne d'entrée est à la masse. Ces deux commutateurs 30₁ et 30₂ sont commandés simultanément par des impulsions arrivant par une ligne 31, qui provient du bloc 29 et qui permettent d'introduire dans les signaux des salves de référence de phase. Les deux commutateurs 30₁ et 30₂ sont dessinés dans la position où la ligne est au potentiel zéro et, dans ce cas, c'est le commutateur 30₂ qui est utilisé.

Les sorties des deux commutateurs 30₁ et 30₂ sont connectées respectivement sur les bornes 3 et 4 du mélangeur en anneau 20 et sur les bornes 3 et 4 du mélangeur en anneau 21.

Les bornes de sortie 7 et 8 du mélangeur 20 et du mélangeur 21 sont connectées en parallèle à travers des résistances 32₁ et 32₂ sur une ligne 33 de sortie du bloc 15.

La figure 1 représente un bloc de sortie 34 qui contient un amplificateur 35 servant de sommateur analogique de la tension modulée en phase, qui arrive par la ligne 33 et du signal vidéo de luminance mélangé aux impulsions de synchronisation de trame et de ligne qui sortent du bloc 1.

On obtient donc à la sortie du bloc 34 un mélange de synchros trame et ligne, d'un signal vidéo de luminance permettant d'obtenir éventuellement une image en noir et blanc et d'une onde à 4,43 MHz, qui est modulée en phase en tout ou rien par des informations numériques.

Ce mélange est analogue aux signaux vidéo courants en standard PAL ou NTSC. Il peut donc être enregistré sur des magnétoscopes du commerce prévus pour ces standards. Il peut également être transmis par voie herzienne ou par câble par les moyens habituels de transmission des signaux vidéo et enregistré à distance par un magnétoscope tandis que les images en noir et blanc peuvent apparaître sur un écran vidéo.

La figure 1 représente un bloc 29 qui comporte des circuits logiques et des registres à décalage.

Le bloc 29 comporte un diviseur d'impulsions par deux 36 qui est une bascule bistable dont une entrée est connectée sur la sortie 7₁ du séparateur de synchros 7 et dont une sortie 36₁ délivre des impulsions, dont la durée est égale à la durée d'une ligne.

La sortie 36₁ est connectée sur une entrée d'une porte ET 37, dont la deuxième entrée est connectée sru la borne 7₄, qui délivre les enveloppes de salves de référence.

On obtient donc à la sortie 37₁ de la porte 37, qui est connectée à la ligne 31, une enveloppe de salve de référence toutes les deux lignes, laquelle impulsion commande simultanément les deux commutateurs 30₁ et 30₂. Pendant cette impulsion enveloppe de salve de référence, le commutateur 30₁ est fermé et il laisse passer l'onde émise par le déphaseur 17 qui est déphasée de 90° par rapport à celle qui sort du déphaseur 18 et qui constitue les salves de référence de phase d'une ligne sur deux.

Pendant tout le reste du temps, c'est le déphaseur en anneau 21 qui est en service.

Le bloc 29 comporte deux registres à décalage 38 et 39, qui ont pour fonction de mettre en série sur une ligne les informations numériques reçues en parallèle sous la forme d'octets sur huit lignes 40 qui sont connectées en parallèle sur les entrées parallèles respectives des deux registres à décalage. Les bornes de sortie série 38₁ et 39₁ des deux registres sont connectées sur les deux entrées d'un commutateur 41, qui fait fonction de multiplexeur logique.

La borne commune du commutateur 41 est connectée sur une borne d'entrée d'un commutateur 42 dont la deuxième borne d'entrée est connectée à la sortie T1 de la mémoire 11a qui détermine le front de référence.

La borne commune du commutateur 42 est connectée à la ligne 28, qui commande le commutateur.

Le commutateur 42 est commandé par les impulsions émises par la sortie T2 de la mémoire 11a qui émet une impulsion qui encadre le front de référence émis par la sortie T1, de sorte que le commutateur 42 se trouve sur la position représentée sur la figure 1 pendant toute cette impulsion enveloppe du front de référence et laisse passer le front de référence vers le modulateur 21 qui effectue un changement de phase qui se retrouve dans le signal sortant du déphaseur 21 et du mélangeur 35.

A la fin de l'impulsion enveloppe du front de référence émise par la sortie T2, le commutateur 42 bascule et les trains d'impulsions sortant en série alternativement des sorties 38₁ et 39₁ de l'un puis de l'autre des deux registres à décalage sont envoyés à travers le commutateur 27 sur le déphaseur en anneau 21 qui les transforme en modulations de phase de l'onde porteuse à 4,43 MHz.

Le bloc 29 comporte un deuxième diviseur d'impulsions par deux 43, qui est une bascule bistable dont une entrée est connectée sur la sortie V1 de la mémoire 14, qui émet une impulsion en début de chaque octet ou demi-octet de contrôle.

Les deux sorties de polarité opposée Q et Q̅ de la bascule émettent donc des impulsions de sens opposé qui alternent à chaque changement d'octet ou de demi-octet.

La sortie Q est connectée sur la borne 39₂ d'inhibition de l'horloge de décalage des bits du registre 39 et elle commande le commutateur 41. Elle est également connectée sur une entrée d'une porte ET 44 dont la deuxième entrée est connectée sur une borne 45 de chargement des octets dans les registres.

La deuxième sortie Q̅ de la bascule 43 est connectée sur la borne 38₂ d'inhibition de l'horloge de décalage des bits du registre 39 et sur une entrée d'une deuxièpe porte ET 46, dont la deuxième entrée est également connectée à la borne de chargement des octets 45.

Enfin, la sortie T3 de la mémoire 11a est connectée sur les entrées d'horloge 38₃ et 39₃ des deux registres à décalage.

Le fonctionnement est le suivant.

Les informations numériques arrivent en parallèle sous forme d'octets sur les huit lignes 40. Elles doivent obligatoirement être mises en série sur une ligne 28 pour commander le commutateur 27.

Pendant qu'un octet est chargé dans un des registres à décalage 38 ou 39, l'autre registre se décharge en série par la sortie 38₁ ou 39₁ à travers le commutateur 41 qui bascule au début de chaque octet, puis à travers le commutateur 42.

Chaque octet est présenté à l'entrée parallèle d'un registre à la suite d'une impulsion de chargement d'octet qui provient d'une mémoire tampon externe et qui arrive sur l'entrée 45 et traverse alternativement la porte 44 ou la porte 46, dont les ouvertures sont commandées alternativement par les sorties Q et Q̅ de la bascule 43.

L'horloge de décalage des registres qui commande la succession des impulsions en série est constituée par la sortie T3 de la mémoire 11a. On a vu que la période de cette horloge est égale à quatre périodes de l'onde à 4,43 MHz.

On voit sur la figure 1 que la sortie V2 de la mémoire 14, qui émet les impulsions de demande de chargement d'un octet,est connectée sur une borne 46 et la sortie V3, qui émet les impulsions de demande de chargement d'un demi-octet de contrôle, est connectée sur une borne 47. Les bornes 46 et 47 sont connectées sur une unité externe, par exemple une mémoire tampon, pour cadencer le transfert des octets et du demi-octet de contrôle vers l'entrée 40 des registres à décalage.

Lorsqu'aucun octet n'est présent sur l'entrée parallèle 40, les horloges de décalage des registres 38 et 39 continuent à donner la cadence et elles prennent en compte l'entrée série des registres qui est connectée à la masse d'où modulation en phase par des zéros, c'est-à-dire pas de modulation de l'onde porteuse à 4,43 MHz.

La figure 3 est un diagramme des impulsions présentes en divers points des circuits de la figure 1. Ce diagramme représente en abscisses le temps.

La ligne 1 représente les synchros lignes sortant sur la borne 7₁.

La ligne 2 représente les impulsions à la sortie 36₁ de la bascule 36.

La ligne 3 représente les enveloppes des salves de référence de phase ou "burst" sur la sortie 7₄ du séparateur 7.

La ligne 4 représente les impulsions à la sortie T2 de la mémoire 11a qui constituent les enveloppes des fronts de référence.

La ligne 5 représente un front montant à la sortie T1 de la mémoire 11a, qui constitue le front de référence pour chaque ligne.

La ligne 6 représente les impulsions à la sortie T3 de la mémoire 11a qui servent d'impulsions d'horloge pour le compteur 13 et pour les registres à décalage 38 et 39.

La ligne 7 représente les impulsions à la sortie V1 de la mémoire 14, qui actionnent la bascule 43 dont les sorties commandent le chargement des octets alternativement dans l'un ou l'autre des deux registres à décalage.

La ligne 8 représente les impulsions à la sortie Q de la bascule 43.

La ligne 9 représente les impulsions à la sortie Q̅ de la bascule 43 qui alternent avec les précédentes.

La ligne 10 représente les trains de huit impulsions sortant en série par la sortie 38₁ du registre à décalage 38.

La ligne 11 représente les trains de huit impulsions sortant en série de la salve 39₁ du registre à décalage 39 et alternant avec les précédents.

La ligne 12 représente la succession des trains de huit impulsions en série (octets) sortant de la borne commune du commutateur 41, qui constitue la somme des deux lignes précédentes.

La ligne 13 représente les trains d'impulsions sortant de la borne commune du commutateur 42 sur la ligne 28 qui correspondent aux impulsions précédentes auxquelles on a ajouté le front de référence (ligne 5).

La ligne 14 représente les impulsions sortant de la porte ET 37, c'est-à-dire une enveloppe de salve de référence de phase sur deux.

La ligne 15 représente les impulsions sur la sortie V2 de la mémoire 14, c'est-à-dire les impulsions de demande de chargement de chaque octet dans les registres à décalage.

La ligne 16 représente les impulsions à la sortie V3 de la mémoire 14, c'est-à-dire les impulsions de demande de chargement des demi-octets de contrôle dans les registres à décalage.

Les impulsions émises par les sorties V2 et V3 sont envoyées à des mémoires tampons externes, dans lesquelles les octets de valeurs numériques et les demi-octets de contrôle sont enregistrés et ces impulsions commandent le transfert des octets successifs sur l'entrée parallèle 40.

On résume ci-après le fonctionnement d'un dispositif selon la figure 1. Celui-ci sert à placer des impulsions binaires représentant des valeurs numériques sur une sous-porteuse vidéo en modulant par tout ou rien la phase de cette sous-porteuse, ce qui a pour effet que les valeurs numériques se trouvent supportées par un signal analogique qui peut être transmis à distance et/ou enregistré par les dispositifs bien connus de transmission ou d'enregistrement de signaux analogiques vidéo.

Le bloc 15 contient les circuits essentiels. L'onde sous-porteuse est créée par l'oscillateur 12.

Dans l'exemple préférentiel décrit, cette onde porteuse a une fréquence de 4,43 MHz, qui correspond à la fréquence habituelle de la sous-porteuse des signaux de chrominance, ce qui a l'avantage que l'on peut mélanger ensuite dans le bloc 34 cette onde porteuse à des signaux de luminance et à des impulsions de synchronisation pour transporter et/ou enregistrer simultanément une image vidéo en noir et blanc et des données numériques. Il est précisé que cet exemple préférentien n'est pas limitatif et on peut moduler une autre onde porteuse vidéo avec des informations numériques, dans le cas où la fréquence de la sous-porteuse des signaux de chrominance serait différente de 4,43 MHz. Comme cette onde porteuse a une très haute fréquence, de l'ordre du MHz, elle permet de transporter un grand débit d'informations numériques.

Les informations numériques rentrent dans le bloc 15 par la ligne 28 et elles sont envoyées sur les bornes intermédiaires 3 et 4 d'un modulateur de phase 21. L'onde porteuse est connectée sur une des entrées du modulateur de phase 21 et on recueille sur la sortie dudit modulateur une onde modulée en phase par tout ou rien par les informations numériques, c'est-à-dire non déphasée lorsque le modulateur reçoit un signal binaire au niveau 0 et déphasé de 180° lorsque le modulateur reçoit un signal binaire au niveau 1. La durée des impulsions binaires est un multiple de la période de l'onde sous-porteuse par exemple le cycle des impulsions binaires qui apparaît sur la ligne 6 de la figure 3 est égal à quatre périodes de l'onde porteuse.

Le deuxième mélangeur en anneau 20 représenté sur la figure 1 est un composant accessoire qui sert uniquement à laisser passer pendant quelques périodes l'ondre sous-porteuse déphasée de 90° pour servir de référence de phase dans le standard PAL.

Le bloc 1 de la figure 1 représente un exemple de réalisation permettant d'utiliser soit une arrivée vidéo externe pour en extraire les impulsions de synchronisation et, en même temps, garder les signaux de luminance, soit un générateur vidéo qui crée des impulsions de synchronisation et un signal de luminance uniforme.

Le bloc 8 correspond à des compteurs et mémoires qui permettent de générer les impulsions de cadencement des opérations de modulation.

L'ensemble compteur 9 mémoire 10 détermine les lignes de chaque trame qui supportent des informations numériques en éliminant quelques lignes en début et en fin de trame, pour lesquelles l'onde sous-porteuse pourrait être perturbée.

L'ensemble compteur 11 mémoire 11a reçoit l'onde sous-porteuse émise par l'oscillateur 12, qui sert de signal d'horloge et il émet un front montant T1 représenté sur la ligne 2 du diagramme, qui sert d'origine des temps sur chaque ligne pour le positionnement précis des informations numériques sur cette ligne. Il émet également sur la sortie T3 des impulsions dont la durée est égale à quatre périodes de l'onde porteuse qui servent à véhiculer les informations numériques.

L'ensemble compteur 13 mémoire 14, est commandé par les impulsions T3 et sert à émettre sur les sorties V1, V2, V3 les impulsions représentées respectivement sur les lignes 7, 15 et 16 du diagramme qui commandent le début des octets d'informations numériques présentées en série.

Le bloc 29 contient essentiellement deux registres à décalage qui permettent de présenter en série les informations numériques arrivant en parallèle sur huit lignes et de les présenter aux moments voulus pour qu'ils s'inscrivent sur les lignes et sur les portions de lignes sélectionnées par les circuits du bloc 8.

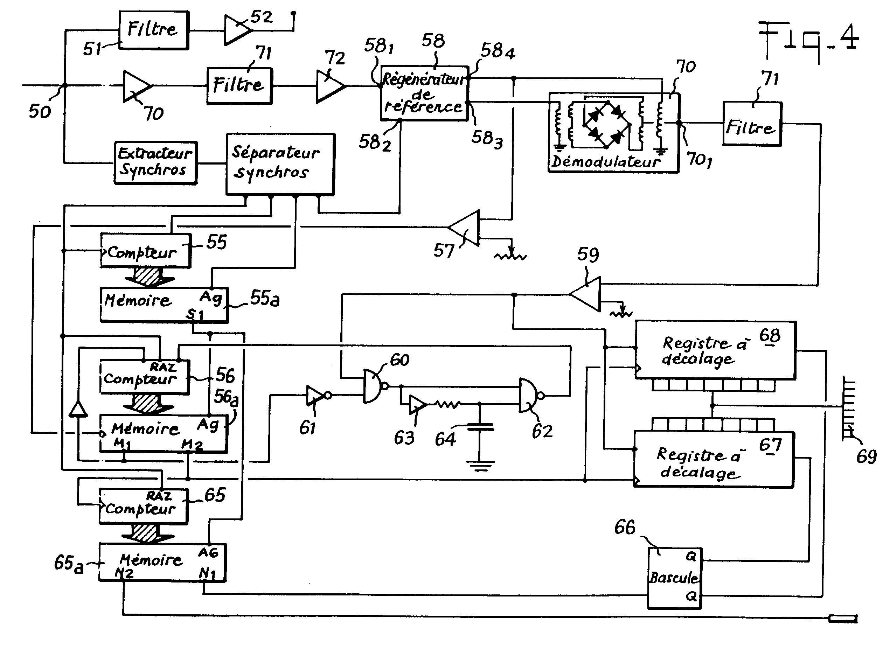

La figure 4 est un schéma général sous forme de bloc diagramme d'un mode de réalisation préférentiel des circuits de lecture selon l'invention, c'est-à-dire des circuits qui permettent de séparer l'onde porteuse des informations numériques des autres signaux vidéo enregistrés ou transmis à distance à la sortie d'un dispositif selon la figure 1 et qui permettent d'extraire de l'onde modulée en phase les informations numériques qu'elle supporte.

Les signaux vidéo sortant d'un magnétoscope ou d'une liaison vidéo entrent dans le dispositif par la borne 50, située en haut à gauche.

Ces signaux sont envoyés en parallèle sur un filtre supresseur 51 qui élimine les signaux ayant une fréquence de 4,43 MHz.

La sortie du filtre 51 est connectée sur un amplificateur 52 dont la sortie est connectée sur un poste de télévision ou sur un moniteur vidéo, qui reproduit l'image en noir et blanc éventuellement contenue dans les signaux reçus.

Les signaux reçus sont envoyés également sur un extracteur de synchro composite 53, puis sur un dispositif de régénération et de séparation des impulsions de synchronisation 54, qui comporte quatre sorties. La sortie 54₁ émet les synchros lignes. La sortie 54₂ émet les synchros de trame. La sortie 54₃ émet un signal logique au niveau 0 pour les trames de sang pair et au niveau 1 pour les trames de rang impair. La sortie 54₄ délivre des impulsions enveloppe des salves de référence de phase (burst). Les circuits 53 et 54 sont identiques aux circuits 3 et 7 de la figure 1 et les sorties 54₁ à 54₄ remplissent les mêmes fonctions que les sorties 7₁ à 7₄.

Le dispositif selon la figure 4 comporte un ensemble compteur d'impulsions 55, associé à une mémoire 55a qui remplissent les mêmes fonctions que l'ensemble 9 et 10 de la figure 1. La mémoire 55a comporte une sortie 51 qui émet un signal au niveau 1 pendant les lignes de chaque trame qui ne sont pas utilisées pour supporter les informations numériques et un signal au niveau 0 pendant les lignes utilisées.

Le dispositif selon la figure 4 comporte un deuxième ensemble composé d'un compteur d'impulsions 56 associé à une mémoire 56a qui sont analogues au compteur 11 accosié à la mémoire 11a et qui remplissent sensiblement les mêmes fonctions.

L'entrée d'horloge du compteur 56 reçoit des impulsions à la fréquence de 4,43 MHz, qui sont mises au niveau du standard TTL (0 - 5V) par un amplificateur comparateur 57 connecté à la sortie 58₄ d'un régénérateur de l'onde de référence 58.

La mémoire 56a a deux sorties.

La sortie M2 est programmée pour délivrer un signal d'horloge pour le compteur suivant, qui sert également de signal d'horloge pour les registres à décalage.

La sortie M1 de la mémoire 56a est programmée pour émettre des impulsions destinées à remettre les signaux d'horloge émis par la sortie M2, en phase avec les fronts de référence qui sont mélangés aux informations numériques.

Le principe est le suivant.

Le compteur 56 est remis à zéro par chaque synchro ligne et il compte les impulsions à fréquence de 4,43 MHz. Le front de référence est extrait des informations numériques et mis au niveau TTL par un comparateur 59 dont la sortie est connectée sur une entrée d'une porte NON ET 60. La sortie M1 de la mémoire est programmée pour émettre une impulsion (fenêtre) entre deux impulsions déterminées de l'onde à 4,43 MHz, par exemple entre la 14ème et la 23ème impulsion, valeurs entre lesquelles se situe le front de référence.

L'impulsion émise par la sortie M1 est inversée par un inverseur 61 et envoyée sur la deuxième entrée de la porte ET 60, à la sortie de laquelle on obtient une nouvelle impulsion ayant un front descendant qui coïncide avec le début de la fenêtre et un front montant qui coïncide avec le front de référence. Cette impulsion est envoyée directement sur une entrée d'une deuxième porte ET 62. Elle est également envoyée, à travers un inverseur 63, sur un circuit retardateur 64 du type RC qui retarde le front descendant et dont la sortie est connectée sur la deuxième entrée de la porte ET 62, de sorte que l'on obtient à la sortie de la porte 62 une impulsion étroite qui coïncide avec le front de référence. La sortie de la porte 62 est connectée sru la borne de chargement du compteur 56.

On voit sur la figure 4 que la sortie M1 de la mémoire 56a est rebouclée sur un étage du compteur d'adresse 56 qui est, par exemple le 6ème étage correspondant au nombre binaire 32, qui se situe au delà de la fin de la fenêtre.

Après avoir reçu l'impulsion de chargement émise par la porte 62, le compteur 56 va donc compter les adresses à partir de 32, qui coïncide avec le front de référence.

On sait que le premier bit de donnée numérique commence par exemple après huit alternances de l'horloge à 4,43 MHz, comptées à partir du front de référence et dure quatre alternances. La sortie M2, qui émet les signaux d'échantillonnage des registres de décalage, est programmée par exemple pour émettre le premier signal 10 alternances après le front de référence et à partir de là, elle émet un nombre de bits dont la durée est égale à quatre alternances du signal à 4,43 MHz et dont le nombre correspond au nombre d'octet d'informations numériques par ligne plus un demi octet de contrôle soit, par exemple, 52 bits pour des enregistrements comportant six octets par ligne et un demi octet de contrôle.

Le dispositif représenté sur la figure 4 comporte, en outre, un ensemble composé d'un troisième compteur binaire 65 faisant fonction de compteur d'adresse d'une mémoire 65a, dont la nature et la fonction sont les mêmes que ceux du compteur 13 associé à la mémoire 14.

Les impulsions d'horloge du compteur 65 sont les impulsions émises par la sortie M2 de la mémoire 56a.

La mémoire 65a a une première sortie M1 qui délivre une impulsion toutes les huit impulsions d'horloge.

La sortie M1 est connectée sur une entrée d'une bascule bi-stable 66, qui remplit la même fonction que la bascule 43 de la figure 1 et dout les deux sorties commandent alternativement l'autorisation et l'inhibition de l'horloge de décalage des deux registres à décalage 67 et 68, qui reçoivent les informations numériques en série et qui les délivrent en parallèle sur huit lignes de sortie 69.

La sortie M2 de la mémoire 65a émet des impulsions de chargement des informations numériques sortant des registres à décalage dans l'interface entrées d'un calculateur destiné à traiter ces informations.

La borne d'entrée 50 est connectée à travers un amplificateur 70 sur un filtre 71 à bande passante étroite, accordé sur 4,43 MHz, de sorte qu'il laisse passer uniquement l'onde porteuse à 4,43 MHz, modulée en fréquence par les informations numériques et les salves de référence de phase (burst). la sortie du filtre 71 est connectée sur un amplificateur limiteur 72, dont la sortie est connectée sur une entrée 58₁ d'un régénérateur de fréqeunce 58, stabilisé par un quartz à 4,43 MHz.

Une deuxième entrée 58₂ du régénérateur 58 est connectée sur la borne 54₄ de la mémoire 54, qui émet des impulsions enveloppes des salves de référence de phase.

Le circuit 58 a deux sorties 58₃ et 58₄. Le fonctionnement du circuit 58 est le suivant. Pendant qu'il reçoit sur l'entrée 58₂ une impulsion enveloppe d'une salve de référence, l'entrée 58₁ reçoit ladite salve de référence. A ce moment le circuit fonctionne en amplificateur et émet sur sa sortie 58₃ une onde qui est en phase avec l'onde de référence de phase. Lorsque l'impulsion enveloppe de la référence de phase arrivant sur la borne 58₂ cesse, le circuit 58 continue à fonctionner en oscillateur et à émettre sur la sortie 58₃ une onde de référence à 4,43 MHz, dont la phase change de 90° à chaque ligne dans le standard PAL.

La sortie 58₄ du circuit 58 n'émet aucune onde pendant les impulsions reçues sur la borne 58₂ et elle transmet le signal modulé en phase reçu sur l'entrée 58₁ pendant le reste du temps. Le circuit 58 est un circuit connu, par exemple un circuit intégré vendu par RCA sous la référence CA-3128Q.

Le dispositif selon la figure 4 comporte un démodulateur de phase 70 qui est, de préférence, identique au mélangeur en anneau représenté sur la figure 2 et aux modulateurs de phase 20 et 21 de la figure 1.

Les bornes d'entrée 1 et 2 du démodulateur 70 sont connectées entre la terre et la borne 58₃ et reçoivent donc une tension de référence non modulée.

Les bornes de sorties 7 et 8 du démodulateur 70 sont connectées l'une à la terre et l'autre à la borne 58₄ du circuit 58 et elles reçoivent donc une tension de 4,43 MHz déphasée par rapport à la tension de référence à 0° ou à 180° par des informations numériques.

La borne 3 du modulateur est connectée à la terre et la borne 4 est connectée à la borne de sortie 70₁ sur laquelle apparaissent des impulsions de tension continue au niveau zéro lorsque le déphasage est zéro, et au niveau 1 lorsque le déphasage est 180°. La borne de sortie 70₁ est connectée sur un filtre 71 destiné à supprimer les harmoniques résiduels de la tension à 4,43 MHz. La sortie du filtre 71 est connectée sur un amplificateur opérationnel 59 monté en comparateur, qui a pour fonction de porter les impulsions au niveau du standard TTL (0-5V).

Les impulsions binaires émises par le comparateur 59 sont envoyées en parallèle sur les entrées série des deux registres à décalage 67 et 68. Ces impulsions comportent également le front de référence qui précède sur chaque ligne les informations numériques et la sortie du comparateur 59 est connectée sur une entrée de la porte NON ET 60, comme on l'a expliqué ci-dessus.

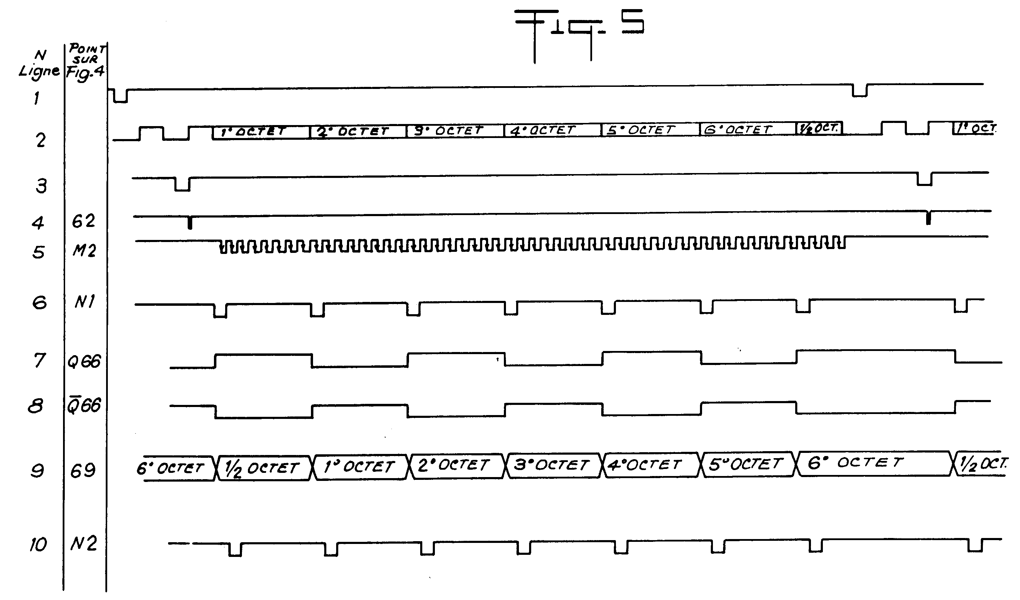

La figure 5 est un chronogramme qui représente en abscisses le temps et qui représente les impulsions en divers points des circuits de la figure 4, pendant les lignes utilisées pour supporter des informations numériques.

La ligne 1 représente les impulsions de synchronisation lignes à la sortie 54₁.

La ligne 2 représente, sur une ligne vidéo, les positions de l'enveloppe de la salve de référence, du front de référence, de six octets d'information numérique et d'un demi octet de contrôle.

La ligne 3 représente par une flèche le front montant qui constitue le front de référence.

La ligne 4 représente les impulsions très étroites émises par la porte NON ET 62.

La ligne 5 représente les impulsions d'horloge des registres à décalage émises par la sortie M2 de la mémoire 56a.

La ligne 6 représente les impulsions de début d'octet émises par la sortie N1 de la mémoire 65a.

Les lignes 7 et 8 représentent les impulsions de polarité émises respectivement par les sorties Q et Q̅ de la bascule 66.

La ligne 9 représente l'apparition des octets ou du demi octet de contrôle sur les sorties en parallèle 69.

La ligne 10 représente les impulsions émises par la sortie N2 de la mémoire 65a pour commander le transfert des octets dans un calculateur.

La figure 6 représente une vue d'ensemble en perspective d'une installation selon l'invention pour enregistrer sur un magnétoscope des images vidéo en noir et blanc et des informations numériques mesurées pendant les prises de vues et pour relire ultérieurement ces informations numériques et les traiter sur un calculateur.

La figure 1 représente un magnétoscope du commerce 72, qui est au standard PAL, par exemple un magnétoscope vendu par la firme SONY, sous la marque "U-MATIC" qui utilise des bandes permettant une heure d'enregistrement et qui constitue dans la présente application une mémoire périphérique pouvant contenir 2,5 Giga octets d'informations numériques. Les bandes enregistrent simultanément les impulsions de synchronisation, les signaux vidéo de luminance qui permettent de restituer une image en noir et blanc et une onde ayant la fréquence de 4,43 MHz, qui correspond habituellement aux signaux de chrominance, mais qui est modulée, dans le cas présent, par des informations numériques.

Le magnétoscope 72 comporte une entrée vidéo 72₁ et une sortie vidéo 72₂.

L'installation comporte un boîtier 73 contenant des cartes de circuits imprimés portant les composants et les circuits représentés sur les figures 1 et 4.

Les informations numériques proviennent d'un bus qui relie un ordinateur local à divers appareils de mesure. Elles arrivent au boîtier 73 généralement en parallèle par une ou plusieurs lignes 74. Le repère 75 représente la ligne de sortie des signaux vidéo d'une caméra 75a en noir et blanc ou en couleur. Le repère 76 représente un moniteur vidéo qui reçoit les signaux vidéo et qui affiche une image vidéo en noir et blanc qui permet de contrôler les opérations d'enregistrement et éventuellement de sélectionner les séquences à enregistrer et qui permet également de reproduire les images en noir et blanc enregistrées dans le magnétoscope.

L'entrée vidéo 72₁ du magnétoscope est reliée par une ligne 77₁ à la sortie du boîtier 73 pour transmettre au magnétoscope les signaux sortant du mélangeur 35 de la figure 1.

La sortie vidéo 72₂ du magnétoscope est connectée sur la borne d'entrée 50 des circuits de la figure 4.

La figure 6 représente, en outre, un mini-ordinateur 78 muni d'un clavier 79, qui est connecté par une nappe 80 de lignes en parallèle à la sortie 69 de la figure 4, de sorte qu'il peut recevoir les informations numériques stockées dans la mémoire périphérique de masse constituée par le magnétoscope et traiter celles-ci en temps différé.

La figure 6 illustre une application possible des procédés et dispositifs selon l'invention, qui permettent d'utiliser un magnétoscope du commerce pour stocker en temps réel un grand nombre d'informations numériques émises par de nombreux capteurs et pour traiter ultérieurement ces informations.

Une installation selon la figure 6 permet d'enregistrer en même temps des informations numériques et des images vidéo en noir et blanc et de garder en mémoire la relation temporelle entre les images et les mesures. Elle permet également de reproduire en noir et blanc les images mémorisées en même temps que l'on extrait de la mémoire les valeurs numériques.

Les procédés et dispositifs selon l'invention permettent d'utiliser des magnétoscopes du commerce 72 comme mémoire de masse périphérique d'un mini-ordinateur 78.

Le dispositif qui est représenté sur les figures 1 et 4 permet d'enregistrer et de transporter simultanément une image en noir et blanc et des informations numériques qui prennent la place des signaux de chrominance.

En variante, si le débit des informations numériques est plus faible, on peut placer ces informations sous forme d'une modulation de phase sur certaines lignes seulement et conserver le signal de chrominance sur la majorité des lignes afin d'enregistrer ou de transmettre à la fois une image en couleurs et des valeurs numériques.

## Revendications

1. Procédé pour enregistrer et/ou pour transmettre à distance un grand débit de signaux binaires en utilisant des moyens d'enregistrement et/ou de transmission de signaux vidéo, par procédé PAL ou NTSC, caractérisé par les opérations suivantes :
- on génère une onde porteuse ayant une fréquence égale à celle d'une onde porteuse de signaux analogiques vidéo de chrominance correspondants à un standard PAL ou NTSC ;
- on module en phase ladite onde porteuse à 0° ou à 180°, par rapport à la phase de salves de référence de phase, par lesdits signaux binaires au moyen d'un modulateur de phase (21) ;
- on mélange de manière additive l'onde modulée avec des impulsions de synchronisation vidéo et avec les salves de référence de phase selon la norme PAL ou NTSC, de manière à ce que les signaux obtenus puissent être enregistrés sur un magnétoscope au standard PAL ou NTSC et/ou transmis à distance, par procédé PAL ou NTSC, la partie luminance du signal composite vidéo obtenu après mélange et compatible avec un standard PAL ou NTSC n'étant pas affectée par les signaux binaires.

2. Procédé pour lire des informations numériques sortant d'un magnétoscope, d'une antenne ou d'un câble vidéo, sous la forme d'une onde porteuse vidéo modulée en phase et mélangée à des impulsions de synchronisation et à des salves de référence de phase par un procédé selon la revendication 1, caractérisé par les opérations suivantes :
- on isole ladite onde porteuse modulée en phase au moyen d'un filtre passe-bande (71) ;
- on génère des impulsions enveloppant lesdites salves de référence au moyen d'un circuit séparateur d'impulsions (54) ;
- on envoie ladite onde porteuse modulée en phase et lesdites impulsions enveloppe des salves de référence de phase, sur deux entrées d'un circuit qui émet en continu une onde de référence en phase avec lesdites salves de référence de phase et qui laisse passer ladite onde modulée en phase ;
- on envoie ladite onde de référence sur une entrée d'un circuit démodulateur de phase et ladite onde modulée en phase sur une autre entrée dudit circuit démodulateur de phase (70) ;
- et on recueille à la sortie dudit circuit démodulateur de phase, des impulsions qui reproduisent les signaux binaires représentant lesdites informations numériques.

3. Procédé selon la revendication 1 caractérisé en ce qu'il est adapté pour enregistrer et/ou pour transmettre à la fois un grand débit de signaux binaires représentant des informations numériques et des images vidéo en noir et blanc en utilisant des moyens d'enregistrement et/ou de transmission de signaux vidéo par procédé PAL ou NTSC, et en ce que :
- on filtre les signaux vidéo au moyen d'un filtre bouchon qui arrête l'onde porteuse modulée par les signaux de chrominance ayant une fréquence de 4,43 MHz et qui laisse passer les signaux de luminance et les impulsions de synchronisation ;
- on génère l'onde porteuse à une fréquence de 4,43 MHz ;
- on module en phase ladite onde porteuse à fréquence de 4,43 Mhz à 0° ou à 180° par lesdits signaux binaires au moyen du modulateur de phase (21) ;
- et on mélange le signal vidéo de luminance, les impulsions de synchronisation obtenues après filtrage,ladite onde à 4,43 MHz modulée en phase et les salves de référence de phase, de sorte que l'on obtient des signaux vidéo qui peuvent être enregistrés sur un magnétoscope et/ou transmis à distance par un canal vidéo en standard PAL ou NTSC et qui permettent d'obtenir à la fois des images en noir et blanc et des données numériques correspondant aux signaux binaires.

4. Procédé selon l'une quelconque des revendications 1 et 3, caractérisé en ce qu'on détermine un certain nombre de lignes au début et à la fin de chaque trame vidéo qui ne supportent aucune information numérique afin d'éviter les perturbations de phase dues aux commutations des têtes de lecture des magnétoscopes.

5. Procédé selon la revendication 4, caractérisé en ce que l'on crée au début de chacune des lignes supportant des informations numériques, un front de référence qui précède le premier signal binaire d'une durée bien déterminée et qui est transmis et/ou enregistré comme un signal binaire.

6. Dispositif pour mettre en oeuvre le procédé de la revendication 1 pour enregistrer et/ou pour transmettre à distance un grand débit de signaux binaires en utilisant des moyens d'enregistrement et/ou de transmission de signaux vidéo par procédé PAL ou NTSC caractérisé en ce qu'il comporte un oscillateur (12) stabilisé par un quartz qui émet une onde ayant une fréquence égale à celle de l'onde porteuse des signaux de chrominance et un modulateur de phase (21) qui reçoit ladite onde porteuse sur une de ses entrées, qui reçoit lesdits signaux binaires sur sa borne de commande et qui délivre, sur sa sortie, ladite onde porteuse non déphasée pendant que le dit signal binaire est au niveau zéro et déphasée à 180°, pendant que ledit signal binaire est au niveau 1, un générateur d'impulsions de synchronisation vidéo et un mélangeur additif qui reçoit lesdites impulsions de synchronisation vidéo et ladite onde porteuse modulée en phase et qui les mélange, de manière additive pour fournir un signal compatible à un signal vidéo PAL ou NTSC, la partie luminance de ce signal n'étant pas affectée par les signaux binaires.

7. Dispositif de lecture des informations numériques enregistrées suivant le procédé selon la revendication 2, sortant d'un magnétoscope, d'une antenne ou d'un câble vidéo, sous la forme d'une onde porteuse modulée en phase par des signaux binaires et mélangée à des impulsions de synchronisation et à des salves de référence de phase selon le procédé de la revendication 1, caractérisé en ce qu'il comporte un filtre passe-bande (71) accordé sur la fréquence de ladite onde porteuse qui laisse passer celle-ci et lesdites salves de référence de phase ; un extracteur de synchros (53) associé à un séparateur de synchros (54), qui émet sur une sortie (54₄) des impulsions enveloppes des dites salves de référence ; un régénérateur de référence (58) qui a deux entrées, une entrée (58₁), connectée à la sortie du dit filtre et une entrée (58₂) connectée à la dite sortie (54₄) dudit séparateur de synchros, et qui a deux sorties, une première sortie (58₃), qui délivre une onde de référence en phase avec lesdites salves de référence de phase et une deuxième sortie (58₄) qui délivre ladite onde modulée en phase, et un modulateur de phase (70) dont l'entrée de référence de phase est connectée sur ladite première sortie (58₃), dont l'entrée d'onde modulée est connectée sur ladite deuxième sortie (58₄) et dont la sortie délivre des impulsions qui constituent lesdits signaux binaires.

8. Dispositif selon la revendication 6, caractérisé en ce qu'il comporte un circuit régénérateur et séparateur d'impulsions de synchronisation (7) qui a une première sortie (7₁) qui délivre les impulsions de synchronisation ligne et une deuxième sortie (7₂) qui délivre les impulsions de synchronisation de trame et il comporte un ensemble constitué par un premier compteur d'impulsions (9) associé à une mémoire (10), pour laquelle il fait fonction de compteur d'adresse et l'entrée d'horloge dudit compteur est connectée à ladite première sortie (7₁) tandis que la borne de remise à zéro dudit compteur est connectée à ladite deuxième sortie (72) et ladite mémoire est programmée pour émettre sur une sortie (S1), un signal de niveau zéro pendant que le compteur appelle les adresses correspondant à un nombre déterminé de lignes situées au début et à la fin de chaque trame.

9. Dispositif selon la revendication 8, caractérisé en ce qu'il comporte un deuxième ensemble constitué par une deuxième mémoire (11a) et par son compteur d'adresse (11) et l'entrée d'horloge dudit compteur d'adresse (11) est connectée à la sortie dudit oscillateur (12), la borne de remise à zéro dudit compteur (11) est connectée sur ladite première sortie (7₁) du séparateur de synchros (7) et ladite mémoire comporte trois sorties, une sortie (T1) qui émet une impulsion qui détermine sur chaque ligne un front de référence, une sortie (T2) qui émet une impulsion enveloppe du front de référence et une sortie (T3) qui émet un signal d'horloge, dont la période est égale à un multiple de la période de ladite onde porteuse.

10. Dispositif selon la revendication 9, caractérisé en ce qu'il comporte une troisième mémoire (14) associée à un compteur d'adresse (13) dont l'entrée d'horloge est connectée à ladite troisième sortie (T3) de la deuxième mémoire et dont la borne de remise à zéro est connectée à la sortie (7₁) dudit séparateur de synchros et ladite mémoire comporte trois sorties : une première sortie (V1), qui émet des signaux de début des octets sur chaque ligne, une deuxième sortie (V2) qui émet des impulsions de demande d'octet et une troisième sortie (V3) qui émet des impulsions de demande d'un demi-octet de contrôle situé à la fin de chaque ligne.

11. Dispositif selon l'une quelconque des revendications 9 ou 10, caractérisé en ce qu'il comporte deux registres de décalage (38, 39), dont les entrées d'horloge sont connectées à ladite troisième sortie (T3) qui sont destinés à recevoir alternativement les signaux binaires arrivant en parallèle sur plusieurs lignes (40) et à les mettre en série pour les envoyer en série sur les bornes intermédiaires dudit modulateur de phase (21).

12. Dispositif selon la revendication 7, caractérisé en ce qu'il comporte deux registres à décalage (67, 68) qui reçoivent alternativement les signaux binaires sortant en série dudit démodulateur de phase (70) et qui les délivrent en parallèle sur plusieurs lignes de sortie (69).

## Claims

1. Process for recording and/or transmitting at a distance binary signals at a high data rate using means for recording and/or distance transmitting, by a PAL or a NTSC process, caracterized by the following steps:
- a carrier wave with the same frequency as that of a wave conveying analog video chrominance corresponding to a PAL or a NTSC process, is generated
- said carrier wave is phase modulated 0° or 180° with said binary signals by means of a phase modulator (21);
- the modulated wave is additively mixed with video synch pulses and with phase reference bursts according to the PAL or NTSC standard, and the resulting signals can be recorded on a PAL or NTSC video tape recorder and/or distance transmitted by a PAL or a NTSC system, the luminance part of the mixed signal which is compatible to the PAL or NTSC standard being not affected by the binary signals.

2. Process for reading digital information output from a tape recorder, an antenna or a video cable, in the form of a phase modulated carrier wave mixed with synch pulses and with phase reference bursts by means of a process in accordance with claim 1, characterized by the following steps :
- said phase modulated carrier wave is isolated by means of a passband filter (71);
- pulses enveloping said phase reference bursts are generated by means of a pulse separator circuit (54);
- said phase modulated carrier wave and said phase reference bursts envelope pulses are fed to the two inputs of a circuit which continually emits a phase reference in phase with said phase reference bursts and which lets through said phase modulated wave;
- said reference wave is fed to one input of a phase demodulator circuit and said phase modulated wave is fed to another input of said phase demodulator circuit (70);
- and pulses reproducing the binary signals representative of said digital information are received at the output of said phase demodulator circuit.

3. Process in accordance with claim 1 characterized in that it is fitted for recording and/or transmitting both a large flow of binary signals representative of digital information and black and white video pictures using known means for recording and/or transmitting video signals, and by the following steps:
- the video signals are filtered by means of a trap filter which blocks the carrier wave modulated with the chrominance signals with a frequency of 4.43 MHz and lets through the luminance signals and the synch pulses;
- a carrier wave with the frequency of 4.43 MHz is generated
- said carrier wave is phase modulated 0° or 180° with said binary signals by means of a phase modulator;
- and the video luminance signal, the synch pulses obtained after filtering, said phase modulated 4.43 MHz wave and the phase reference bursts are mixed in such a way as to obtain video signals which can be recorded on a video tape recorder and/or transmitted at a distance via a PAL or NTSC standard video channel and which make it possible to receive both black and white pictures and digital information corresponding to binary signals.

4. Process in accordance with any from claims 1 and 3, characterized in that a certain number of lines are determined at the beginning and at the end of each video field and which do not convey any digital information in ordre to avoid the phase interference caused by the switching of the video tape recorder reading heads.

5. process in accordance with claim 4 wherein at the beginning of each one of the lines conveying digital information, a reference edge is created which precedes the first binary signal by a set interval and which is transmitted and/or recorded as a binary signal.

6. Device for implementation of the process in accordance with claim 1, for recording and/or transmitting a large flow of binary signals using known means for recording and/or transmitting video signals in accordance with the PAL or NTSC standard, characterized in that it includes a quartz-stabilized oscillator (12) which emits a wave with the same frequency as that of the wave conveying the chrominance signals, phase modulator which receives said binary signals on its control terminal and which supplies, on its output, said carrier wave unshifted when said binary signal is at 0 and phase shifted 180° when said binary signal is at 1 , a video synch pulse generator, and mixer which receives said video synch pulses and said phase modulated carrier wave and which additively mixes them for providing a PAL or NTSC compatible video signal, in which the signal of luminance is not affected.

7. Device for reading the digital information which have been recorded in accordance with the claim 2 and coming from a video tape recorder, an antenna or a video cable in the form of a carrier wave phase modulated with binary signals and mixed with synch pulses and phase reference bursts, including passband filter (71) tuned to the frequency of said carrier wave which lets through the latter and said phase reference bursts; synch extractor (53) associated to synch separator, which supplies at one output envelope pulses of said reference bursts; reference regenerator (58) which has two inputs, input (581) connected to the output of said filter and input (582) connected to the output of said filter and input connected to said output (554) of said synch separator, and which has two outputs, first output (583) which supplies a reference wave in phase with said phase reference bursts and second output (584) which supplies said phase modulated wave, and phase modulator (70) whose phase reference input is connected to said first output (583), whose modulated wave input is connected to said second output (584), and whose output supplies pulses which are constitutive of said binary signals.

8. Device in accordance with claim 6, characterized in that it includes synch pulse regenerator and separator circuit (7) which has a first output (71) which supplies line synch pulses and a second output (72) which supplies field synch pulses, and including a unit comprising a first pulse counter (9) associated to memory (10) which the latter uses as an adress counter and the clock input of said counter is connected to said first output (71), whereas the reset terminal of said counter is connected to said second output (72) and said memory is programmed to generate on output (S1) a zero level signal while the counter calls the addresses corresponding to a set number of lines located at the beginning and at the end of each field.

9. Device in accordance with claim 8, including a second unit comprised of a second memory (11a) and of its address counter and the clock input of said address conter (11) is connected to the output of said oscillator (12), ythe reset terminal of said conter (11) is connected to said first output (71) of said synch separator (7) and said memory includes three outputs, output (T1) which generates a pulse which a reference edge on each line output (T2) which generates an envelope pulse of the reference edge, and output (T3) which generates a clock signal whose period is equal to a multiple of the period of said carrier wave

10. Device in accordance with claim 9, including a third memory (14) associated to address counter (13) whose clock input is connected to said third output (13) of the second memory and whose reset terminal is connected to output (71) of said synch separator and said memory includes three outputs, a first output (V1) which generates byte start signals on each line, a second output (V2) which generates byte request pulses and a third output (V3) which generates request pulses for a control half byte located a the end of each line.

11. Device in accordance with any from claims, 9 and 10 characterized in that it includes two shift registers (38,39), whose clock inputs are connected to said output (T3) which are intented to receive aternatively the binary signals receveid in parallel
on several line (40) and to set them in series before sending them in series on the intermediate terminals of said phase modulator (21).

12. Device in accordance with claim 7, including two shift registers (67,68) which receive alternatively the binary signals output in series from said phase modulator (70) and which supply them in parallel on several output lines (69).

## Patentansprüche

1. Verfahren zur Aufzeichnung und/oder Fernübertragung einer großen Menge binärer Signale, unter Verwendung von Aufzeichnungs- und/oder Übertragungsmöglichkeiten von Videosignalen, in PAL oder NTSC, das folgendermaßen funktioniert:
- man erzeugt einen Träger mit einer Frequenz, die der eines Trägers von analogen Farbart-Videosignalen der Norm PAL oder NTSC entspricht;
- die Phase dieses Trägers wird mit Hilfe eines Phasenmodulators (21) durch die erwähnten Binärsignale im Verhältnis zur Phase der Phasenreferenzcodes um 0° oder um 180° verschoben;
- man mischt den modulierten Träger additiv mit Video-Synchronisierungsimpulsen und mit Phasenreferenzcodes, die der Norm PAL oder NTSC entsprechen, sodaß die erhaltenen Signale auf einem Videorecorder der Norm PAL oder NTSC aufgezeichnet und/oder in PAL oder NTSC fernübertragen werden können, wobei der Farbdichteanteil des zusammengesetzten Videosignals, das man nach dem Mischen erhält und das kompatibel mit der Norm PAL oder NTSC ist, durch die Binärsignale nicht beeinträchtigt wird.

2. Verfahren zum Lesen digitaler Informationen, die in Form eines phasenmodulierten Videoträgers von einem Videorecorder, einer Antenne oder einem Videokabel kommen, und durch ein Verfahren gemäß Patentanspruch 1 mit Synchronisierungsimpulsen und Phasenreferenzcodes gemischt werden, das folgendermaßen funktioniert:
- man isoliert den erwähnten phasenmodulierten Träger mittels eines Bandpaßfilters (71);
- man erzeugt mit einem Impulstrennkreis (54) Impulse, die die erwähnten Referenzcodes einhüllen;
- man leitet diesen phasenmodulierten Träger und die erwähnten Impulse, die Phasenreferenzcodehüllen bilden, zu zwei Eingängen eines Schaltkreises, der ein gleichmäßiges Trägersignal aussendet, das mit den erwähnten Phasenreferenzcodes phasengleich ist und diesen phasenmodulierten Träger passieren läßt;
- man leitet diesen Referenzträger zu einem Eingang eines Phasendemodulatorkreises und den erwähnten phasenmodulierten Träger zu einem anderen Eingang dieses Phasendemodulatorkreises (70);
- und man erhält am Ausgang dieses Phasendemodulatorkreises Impulse, die die Binärsignale reproduzieren, die die erwähnten digitalen Informationen darstellen.

3. Verfahren gemäß Patentanspruch 1, das dadurch gekennzeichnet ist, daß es zur Aufzeichnung und/oder Übertragung sowohl einer großen Menge binärer Signale, die digitale Informationen darstellen, wie auch von Schwarzweiß-Videobildern geeignet ist, wobei Aufzeichnungs- und/oder Übertragungsmöglichkeiten von Videosignalen in PAL oder NTSC verwendet werden, und :
- man die Videosignale mit einem Sperrfilter filtert, der den von den Farbartsignalen, die eine Frequenz von 4,43 MHz haben, modulierten Träger stoppt und die Farbdichtesignale und Synchronisierungsimpulse passieren läßt;
- man einen Träger mit einer Frequenz von 4,43 MHz erzeugt;
- man die Phase dieses Trägers mit einer Frequenz von 4,43 MHz mit einem Phasenmodulator (21) durch die erwähnten Binärsignale um 0° oder um 180° verschiebt;
- und man das Video-Farbdichtesignal, die nach dem Filtern erhaltenen Synchronisierungsimpulse, den erwähnten, phasenmodulierten Träger mit einer Frequenz von 4,43 MHz und die Phasenreferenzcodes vermischt, sodaß man Videosignale erhält, die auf einem Videorecorder aufgezeichnet und/oder über einen Videokanal in PAL oder NTSC fernübertragen werden können, und mit denen man gleichzeitig Schwarzweißbilder und die den Binärsignalen entsprechenden digitalen Daten erhalten kann.

4. Verfahren gemäß einem der Patentansprüche 1 und 3, das dadurch gekennzeichnet ist, daß man eine bestimmte Anzahl von Zeilen zu Beginn und am Ende jedes Video-Bildteils festlegt, die überhaupt keine digitale Information tragen, um Phasenstörungen zu vermeiden, die auf das Umschalten der Leseköpfe der Videorecorder zurückzuführen sind.

5. Verfahren gemäß Patentanspruch 4, das dadurch gekennzeichnet ist, daß man am Anfang jeder Zeile, die digitale Informationen trägt, vor dem ersten Binärsignal eine Referenzfront von genau festgelegter Dauer erzeugt, die wie ein Binärsignal übertragen und/oder aufgezeichnet wird.

6. Anlage für den Einsatz des Verfahrens aus dem Patenanspruch 1 zur Aufzeichnung und/oder Fernübertragung einer großen Menge binärer Signale, unter Verwendung von Aufzeichnungs- und/oder Übertragungsmöglichkeiten von Videosignalen, in PAL oder NTSC, die dadurch gekennzeichnet ist, daß sie einen quarzstabilisierten Oszillator (12) enthält, der eine Welle mit der gleichen Frequenz aussendet wie die des Farbartträgers, sowie einen Phasenmodulator (21), der diesen Träger auf einem seiner Eingänge empfängt, der die erwähnten Binärsignale auf seiner Steuerklemme empfängt, und der an seinem Ausgang diesen Träger mit nicht verschobener Phase liefert, wenn das erwähnte Binärsignal auf dem Pegel Null steht, und um 180° phasenverschoben, wenn das erwähnte Binärsignal auf dem Pegel 1 steht, einen Generator von Video-Synchronisierungsimpulsen sowie einen additiven Mischer, der die erwähnten Video-Synchronisierungsimpulse und diesen phasenverschobenen Träger empfängt und additiv vermischt, um ein mit dem PAL- oder NTSC-Videosignal kompatibles Signal zu liefern, wobei der Farbdichteanteil dieses Signals durch die Binärsignale nicht beeinflußt wird.

7. Einrichtung zum Lesen aufgezeichneter digitaler Informationen gemäß dem Verfahren in Patentanspruch 2, die von einem Videorecorder, einer Antenne oder einem Videokabel kommen, in Form eines durch Binärsignale phasenmodulierten Trägers, die nach dem Verfahren im Patentanspruch 1 mit Synchronisierungsimpulsen und Referenzcodes vermischt werden, und die dadurch gekennzeichnet ist, daß sie ein Bandpaßfilter (71) enthält, das auf die Frequenz dieses Trägers abgestimmt ist, und diesen sowie die erwähnten Phasenreferenzcodes hindurchläßt; einen Synchronextraktor (53) in Verbindung mit einem Synchrontrenner (54), der auf einen Ausgang (54 4) Impulse sendet, die Referenzcodehüllen bilden; einen Referenzregenerator (58) mit zwei Eingängen, wobei ein Eingang (58 1) an den Ausgang des erwähnten Filters und ein Eingang (58 2) an den erwähnten Ausgang (54 4) dieses Synchrontrenners angeschlossen ist, und mit zwei Ausgängen, einem ersten Ausgang (58 3), der einen Referenzträger liefert, der mit den erwähnten Phasenreferenzcodes phasengleich ist, und einen zweiten Ausgang (58 4), der den erwähnten phasenmodulierten Träger liefert, sowie einen Phasenmodulator (70), dessen Phasenreferenzeingang an diesen ersten Ausgang (58 3) angeschlossen ist, dessen Eingang für den modulierten Träger an diesen zweiten Ausgang (58 4) angeschlossen ist, und dessen Ausgang Impulse liefert, die die erwähnten Binärsignale bilden.

8. Einrichtung gemäß Patentanspruch 6, die dadurch gekennzeichnet ist, daß sie einen Schaltkreis zur Regenerierung und Trennung der Synchronisierungsimpulse (7) besitzt, mit einem ersten Ausgang (7 1), der die Zeilen-Synchronimpulse liefert, und einem zweiten Ausgang (7 2), der die Bildteil-Synchronimpulse liefert, und der eine Einheit besitzt, die aus einem ersten Impulszähler (9) in Verbindung mit einem Speicher (10) besteht, für die er als Adressenzähler fungiert, wobei der Zeitgebereingang dieses Zählers an den erwähnten ersten Ausgang (7 1) angeschlossen ist, während die Klemme für die erneute Nulleinstellung dieses Zählers an den erwähnten zweiten Ausgang (7 2) angeschlossen ist, und der erwähnte Speicher darauf programmiert ist, auf einem Ausgang (S1) ein Signal des Pegels Null auszusenden, während der Zähler die Adressen abruft, die einer bestimmten Zeilenanzahl zu Beginn und am Ende jedes Bildteils entsprechen.

9. Einrichtung gemäß Patentanspruch 8, die dadurch gekennzeichnet ist, daß sie eine zweite Einheit besitzt, die von einem zweiten Speicher (11a) gebildet wird, und über seinen Adressenzähler (11) und den Eingang des Zeitgebers dieses Adressenzählers (11) an den Ausgang des erwähnten Oszillators (12) angeschlossen ist, wobei die Klemme für die erneute Nulleinstellung dieses Zählers an den erwähnten ersten Ausgang (7 1) des Synchrontrenners (7) angeschlossen ist und dieser Speicher drei Ausgänge besitzt, einen Ausgang (T1), der einen Impuls aussendet, der auf jeder Zeile eine Referenzfront festlegt, einen Ausgang (T2), der einen Impuls aussendet, der die Hülle der Referenzfront bildet, und einen Ausgang (T3), der ein Zeitgebersignal aussendet, dessen Periode ein Vielfaches der Periode des erwähnten Trägers darstellt.

10. Einrichtung gemäß Patentanspruch 9, die dadurch gekennzeichnet ist, daß sie einen dritten Speicher (14) in Verbindung mit einem Adressenzähler (13) besitzt, dessen Zeitgebereingang an den erwähnten dritten Ausgang (T3) des zweiten Speichers angeschlossen ist, und dessen Klemme für die erneute Nulleinstellung an den erwähnten ersten Ausgang (7 1) des Synchrontrenners (7) angeschlossen ist, wobei dieser Speicher drei Ausgänge besitzt: einen ersten Ausgang (V1), der auf jeder Zeile Signale am Anfang der Oktetts aussendet, einen zweiten Ausgang (V2), der Impulse zur Anforderung von Oktetts aussendet, und einen dritten Ausgang (V3), der Impulse zur Anforderung eines halben Kontrolloktetts aussendet, das sich am Ende jeder Zeile befindet.

11. Einrichtung entsprechend einem der Patentansprüche 9 oder 10, die dadurch gekennzeichnet ist, daß sie zwei Verschiebungsregister (38, 39) besitzt, deren Zeitgebereingänge an den erwähnten dritten Ausgang (T3) angeschlossen sind, und die dazu bestimmt sind, abwechselnd die parallel auf mehreren Leitungen (40) ankommenden Binärsignale zu empfangen und in Serie umzusetzen, um sie anschließend seriell auf die Zwischenklemmen des erwähnten Phasenmodulators (21) zu leiten.

12. Einrichtung gemäß Patentanspruch 7, die dadurch gekennzeichnet ist, daß sie zwei Verschiebungsregister (67, 68) besitzt, die abwechselnd die Binärsignale empfangen, die in Serie von dem erwähnten Phasendemodulator (70) kommen, und die sie auf mehreren Ausgangsleitungen (69) parallel liefern.
